# EUROPÄISCHE PATENTSCHRIFT

(11) **EP 3 485 175 B1**
(45) Veröffentlichungstag und Bekanntmachung des Hinweises auf die Patenterteilung: **23.03.2022**
(21) Anmeldenummer: 17740318.5
(22) Anmeldetag: 04.07.2017
(51) Int. Cl.: F16B 35/06

(54) **EINSATZ UND VERFAHREN ZUR VERBINDUNG EINES ELEKTRISCHEN ANSCHLUSSES MIT EINER WAND**
INSERT AND METHOD FOR CONNECTING AN ELECTRICAL CONNECTION TO A WALL
INSERT ET PROCÉDÉ SERVANT À CONNECTER UN RACCORDEMENT ÉLECTRIQUE À UNE PAROI

(30) Priorität: 12.07.2016 DE 102016112782
(43) Veröffentlichungstag der Anmeldung: 22.05.2019
(73) Patentinhaber: Fairchild Fasteners Europe - Camloc GmbH, 65779 Kelkheim (Taunus) (DE)
(72) Erfinder: RASCHKE, Nikolas, 65189 Wiesbaden (DE); SCHOLZ, Philipp, 67737 Olsbrücken (DE)
(74) Vertreter: Keil & Schaafhausen Patentanwälte PartGmbB
(86) Internationale Anmeldenummer: PCT/EP2017/066587
(87) Internationale Veröffentlichungsnummer: WO 2018/011008

(56) Entgegenhaltungen:
- WO-A1-98/06917
- WO-A1-2005/064771
- JP-A- 2004 340 211
- US-A- 4 671 583
- US-A1- 2014 230 228

## Beschreibung

Die Erfindung betrifft einen Einsatz sowie ein Verfahren zur Verbindung eines elektrischen Anschlusses mit einer Wand, beispielsweise einem dünnen Blech.

Um die elektrische Leitfähigkeit zwischen einem Kabel und einem Blech herzustellen, ist es bekannt, einen Bolzen (Massebolzen oder Erdungsbolzen) an einem Blech mittels einer deformierbaren Hülse zu befestigen. Hierfür muss die Verbindung Zugkräften sowie einem Drehmoment widerstehen, welche beispielsweise bei der Befestigung eines Kabelschuhs auf dem Gewindebolzen durch eine Mutter erzeugt werden können. Dieses wird durch eine radiale Aufweitung und erhöhte Flächenpressung im Bereich des Bleches erreicht. Zusätzlich weitet sich die Hülse außerhalb des Bleches auf, so dass eine erhöhte Zugkraft erreicht werden kann. Die Übertragung des Stromes erfolgt an den Wänden der Bohrung im Blech. Die Installation und Verformung der Hülse muss sicherstellen, dass in diesem Bereich der Übergangswiderstand so niedrig wie möglich ist.

Aus der EP 0 880 199 B1 ist hierfür ein Einsatz der oben genannten Art bekannt, der einen elektrisch leitenden Bolzen und einen Ring aufweist. Der Bolzen weist einen Kopf, der sich entlang einer ersten Längsachse erstreckt, sowie einen Schaft auf, welcher mit wenigstens einem Verbindungsmittel versehen ist. Der Ring ist mit einer Durchgangsöffnung zur Aufnahme des Bolzens versehen, die sich entlang einer zweiten Längsachse erstreckt. Der Kopf des Bolzens ist dabei als ein Kegelstumpf ausgebildet, der die zylindrisch ausgebildete Durchgangsöffnung des Rings aufweitet, wenn der Kopf in den Ring gezogen wird. Diese Kombination eines Kegels mit einer zylindrischen Bohrung bewirkt eine relativ hohe Kraft und Deformation zu Beginn des Prozesses noch außerhalb der eigentlichen Verbindungsstelle. Weiter ist aus der EP 1 376 766 B1 ein Einsatz mit einem Ring, der innen bereichsweise konisch ist, und einer kegelstumpfartigen Gewindehülse bekannt.

Die WO 2005/064771 A1 offenbart eine Vorrichtung zur Befestigung eines Wälzlagers an einem Maschinenteil. Erfindungsgemäß wird ein Bolzenelement mit einem kugelmantelförmigen Bolzenkopf zur Fixierung eines Anschlagteils an einem Maschinenteil verwendet. Das Anschlagteil dient zur einseitigen Lagebestimmung eines Lagerrings, der für die Aufnahme des Wälzlagers vorgesehen ist.

In der JP 2004 340211 A wird ein Befestigungsmittel beschrieben, das bei einer Schraubverbindung, insbesondere bei einem schrägen Schaft des Fixierungswerkzeugs, eine spaltfreie Verbindung zwischen Schraubenkopf, Mutter etc. und einem weiteren zu verbindenden Element ermöglicht.

Ein Befestigungsmittel zur beweglichen Anordnung eines Panels ist in der WO 98/06917 A1 offenbart. Das Befestigungsmittel besteht aus einer Gewindeschraube mit einem kugelförmigen Schraubenkopf und einer mehrteiligen Aufnahmevorrichtung für diesen. Die Einzelteile der Aufnahmevorrichtung werden hierbei so über die Schraube geführt und verschraubt, dass der Schraubenkopf nach erfolgter Montage beweglich in der Aufnahmevorrichtung gelagert ist.

Aus der US 2014/230228 A1 ist ein Befestigungssystem bestehend aus einem Befestigungsmittel und einer Unterlegscheibe bekannt, wobei der Kopf des Befestigungsmittels und die Unterlegscheibe derart ausgestaltet sind, dass eine Selbstausrichtung der Komponenten bei einer Befestigung begünstigt wird. Des Weiteren sieht das Befestigungssystem das Einführen einer Hülse in das Montageloch sowie die Verwendung einer Dichtung zwischen der Unterlegscheibe und dem zu befestigenden Objekt vor, sodass ein Schutz vor elektromagnetischen Einflüssen gegeben ist.

Es ist daher eine Aufgabe der vorliegenden Erfindung, einen verbesserten Einsatz bzw. ein verbessertes Verfahren bereitzustellen, die insbesondere einen gleichmäßigeren Kraftverlauf während der Montage des Bolzens in dem Ring, eine bessere Einflussnahme auf die eigentliche Verbindungsstelle und/oder einen geringeren Kraftanstieg bei größerem Klemmbereich ermöglichen.

Diese Aufgabe wird mit einem Einsatz mit dem Merkmal des Anspruchs 1 sowie einem Verfahren mit dem Merkmal des Anspruchs 10 gelöst.

Vorzugsweise weist der Kopf des Einsatzes eine Außenkontur auf, die wenigstens bereichsweise durch Rotation einer mit einem ersten Radius gekrümmten und von der ersten Längsachse beabstandeten ersten Linie in die erste Längsachse erzeugt ist. Weiter ist die Durchgangsöffnung des Rings mit einer Innenkontur versehen, die wenigstens bereichsweise durch Rotation einer mit einem zweiten Radius gekrümmten und von der zweiten Längsachse beabstandeten zweiten Linie um die zweite Längsachse erzeugt ist. Durch die beiden Radien ist es möglich, die Überdeckung außerhalb der Verbindungsstelle, d.h. des Bereichs, in welchem der Ring mit der Wand verpresst wird, kleiner und die Installationskräfte folglich niedriger zu halten. Durch einen tangentialen Auslauf der Radien können die Kräfte zudem bei größeren Klemmbereichen gleichmäßiger gehalten werden.

Nach einer bevorzugten Ausführungsform der Erfindung ist die erste Linie derart angeordnet, dass diese auf der dem Schaft gegenüberliegenden Seite des Kopfes zumindest näherungsweise parallel zu der ersten Längsachse verläuft.

In gleicher Weise kann auch die zweite Linie derart angeordnet sein, dass diese an einem Ende des Rings zumindest näherungsweise parallel zu der zweiten Längsachse verläuft. Vorzugsweise ist dies das Ende des Rings, welches im montierten Zustand, d.h. wenn der Bolzen in den Ring eingesetzt ist, dem Kopf des Bolzens zugewandt ist und dem Schaft des Bolzens abgewandt ist.

Es hat sich als zweckmäßig erwiesen, wenn die gesamte Außenkontur des Kopfes durch Rotation der ersten Linie um die erste Längsachse erzeugt ist. Alternativ oder zusätzlich kann die Innenkontur der Durchgangsöffnung ausschließlich durch Rotation der zweiten Linie um die zweite Längsachse definiert sein.

Insbesondere ermöglicht es die Gestaltung der Innenkontur des Rings und der Außenkontur des Kopfes als Rotationskörper, die durch gekrümmte Linien erzeugt sind, dass definierte Bereiche des Rings durch den Kopf des Bolzens gezielt durch Aufweitung verformt werden. Es hat sich als besonders vorteilhaft erwiesen, wenn die Außenkontur und die Innenkontur derart aufeinander abgestimmt sind, dass der Ring in einem im montierten Zustand in einer Durchgangsöffnung der Wand gelegen Bereich radial aufgeweitet wird und/oder dass der Ring in einem im montierten Zustand außerhalb der Durchgangsöffnung der Wand gelegen Bereich unter Ausbildung einer Wulst oder eines Überstands radial aufgeweitet wird. Hierdurch wird eine besonders gute mechanische Verbindung des Rings mit der Wand sowie des Bolzens mit dem Ring erreicht, was zu einem niedrigen elektrischen Kontaktwiderstand führt. Eine definierte lokale Umformung des Rings durch den Kopf des Bolzens bewirkt zudem, dass die hierfür erforderlichen Kräfte vergleichsweise gering sind.

Die Gestaltung der Radien und die Anordnung der Linien, welche die Außenkontur des Kopfes bzw. die Innenkontur der Durchgangsöffnung bilden, ist vorzugsweise so gewählt, dass der dem Schaft zugewandte Bereich des Kopfes mit einer Spielpassung in den Bereich der Durchgangsöffnung des Rings eingesetzt werden kann, welcher den größeren Durchmesser aufweist. Auch der Außendurchmesser des Schafts des Bolzens ist vorzugsweise kleiner als der kleinste Innendurchmesser der Durchgangsöffnung des Rings. Vorzugsweise ist der erste Radius von dem zweiten Radius verschieden. Insbesondere ist der erste Radius kleiner als der zweite Radius. Dies bewirkt, dass der Ring, und gegebenenfalls auch der Bolzen, plastisch verformt werden, wenn der Kopf des Bolzens in die Durchgangsöffnung des Rings gepresst wird. Hierdurch wird eine besonders gleichmäßige Verformung des Rings erzeugt, die den Ring definiert in Anlage mit der Innenwandung einer Durchgangsöffnung in der Wand bringen kann. Zudem ist es möglich, den Ring auf einer Seite der Wand derart auszuweiten, dass der Ring eine Wulst bzw. einen Überstand ausbildet und dadurch mit der Wand verpresst wird.

Zweckmäßigerweise ist der Abstand der ersten gekrümmten Linie und der ersten Längsachse so gewählt, dass dieser sich vom schaftseitigen Ende des Kopfes zum gegenüberliegenden Ende des Kopfes vergrößert. Damit nimmt der Grad der Verformung des Rings bei fortgesetztem Einpressen des Bolzens in den Ring zu.

Das wenigstens eine Verbindungsmittel ist vorzugsweise ein Innengewinde oder ein Außengewinde des Schaftes. Hierdurch kann der Bolzen mittels eines entsprechenden Gegenelements, beispielsweise einer Mutter, in den Ring gezogen werden. Alternativ oder zusätzlich hierzu können auch weitere Verbindungsmittel vorgesehen sein, die insbesondere einen axialen Hub des Bolzens relativ zu dem Ring bewirken können. Verbindungsmittel können auch dazu verwendet werden, eine Anschlussklemme oder dergleichen mit dem Bolzen zu verbinden. Alternativ hierzu kann auch der Ring unmittelbar mit einem elektrischen Anschluss verbunden sein.

Wenn der Bolzen beispielsweise mittels einer Gewindemutter in den Ring gezogen wird, ist eine relative Drehung des Bolzens zu dem Ring unerwünscht. Um eine solche Drehung des Bolzens relativ zu dem Ring zumindest zu erschweren, kann die Außenkontur des Kopfes bereichsweise mit einer Profilierung versehen sein. Eine solche Profilierung kann beispielsweise eine Rändelung sein, die insbesondere in einem dem Schaft abgewandten Bereich des Kopfes vorgesehen ist. Alternativ oder zusätzlich hierzu kann die Profilierung auch Längsnuten und/oder Längsrippen aufweisen. Eine solche Profilierung kann auch in der Innenkontur des Rings vorgesehen sein.

Unabhängig von einer Profilierung der Außenkontur des Kopfes kann eine relative Drehung des Bolzens zu dem Ring dadurch zumindest erschwert werden, wenn der Schaft des Bolzens sich entlang einer dritten Längsachse erstreckt, die parallel und versetzt zu der ersten Längsachse ist. Mit anderen Worten ist der Schaft exzentrisch zu dem Kopf angeordnet. Ein Drehmoment, welches beispielsweise mittels einer Gewindemutter auf dem Schaft ausgeübt wird, kann durch eine solche exzentrische Anordnung des Kopfes relativ zu dem Schaft zumindest teilweise durch den Kopf abgestützt werden. Um zu verhindern, dass sich der Ring innerhalb der Durchgangsöffnung der Wand mitdreht, ist die zweite Längsachse des Rings zweckmäßigerweise konzentrisch zu der ersten Längsachse des Kopfes des Bolzens angeordnet. Mit anderen Worten ist der Schaft sowohl zu dem Kopf als auch zu dem Ring exzentrisch positioniert.

Der Ring ist nach einer bevorzugten Ausführungsform mit einem Absatz versehen, der einen relativ zu dem übrigen Ring größeren Außendurchmesser aufweist. So kann der Ring zum Beispiel einer Außenkontur mit zwei jeweils zylindrischen Abschnitten aufweisen, von denen der Abschnitt mit dem größeren Außendurchmesser den Absatz bildet. Mittels des Absatzes kann der Ring an einer Seite der Wand, die mit dem elektrischen Anschluss verbunden werden soll, in einem die Durchgangsöffnung der Wand umgebenen Bereich anliegen.

Der Abstand der zweiten gekrümmten Linie von der Längsachse vergrößert sich vorzugsweise von einem Ende des Rings zum gegenüberliegenden Ende des Rings. Dabei wird es bevorzugt, wenn das im montierten Zustand des Einsatzes, d.h. wenn der Bolzen in den Ring eingepresst ist, schaftseitige Ende des Rings den kleineren Innendurchmesser aufweist und das gegenüberliegende kopfseitige Ende des Rings den größeren Innendurchmesser aufweist. Um eine plastische Verformung des Rings zu bewirken, weist der Kopf wenigstens einen Bereich auf, dessen Außendurchmesser größer als der Innendurchmesser eines Bereichs des Rings ist.

Ein erfindungsgemäßes Verfahren zur Herstellung einer Verbindung eines elektrischen Anschlusses mit einer Wand kann zunächst das Bereitstellen eines Einsatzes der oben genannten Art erfordern, wobei der Bolzen und/oder der Ring mit dem elektrischen Anschluss verbunden ist oder später mit diesem verbindbar ist. Zunächst kann der Ring des Einsatzes in eine Durchgangsöffnung der Wand eingesetzt werden. Vorzugsweise ist der Ring hierzu mit einem Absatz versehen, der an einer Seite der Wand anliegen kann, wenn der Ring vollständig in die Durchgangsöffnung der Wand eingesetzt ist. Anschließend kann der Schaft des Bolzens in den Ring von der dem Absatz gegenüberliegenden Seiten eingesetzt werden. Hiernach kann der Ring durch eine Bewegung des Kopfes relativ zu dem Ring entlang der zweiten Längsachse unter Ausbildung eines Wulstes bzw. Überstands des Rings auf der dem Absatz gegenüberliegenden Seite der Wand verformt werden.

Weitere Merkmale, Vorteile und Anwendungsmöglichkeiten der vorliegenden Erfindungen ergeben sich auch aus der nachfolgenden Beschreibung von Ausführungsbeispielen und unter Bezugnahme auf die Zeichnungen.

Es zeigen schematisch:
- Figur 1: in Schnittansicht einen erfindungsgemäßen Einsatz nach einer ersten Ausführungsform vor der Montage,
- Figur 2: in Schnittansicht den Einsatz nach Figur 1 nach der Montage in einer Wand,
- Figur 3: in Schnittansicht einen erfindungsgemäßen Einsatz nach einer zweiten Ausführungsform vor der Montage, und
- Figur 4: in Draufsicht den Einsatz nach Figur 3.

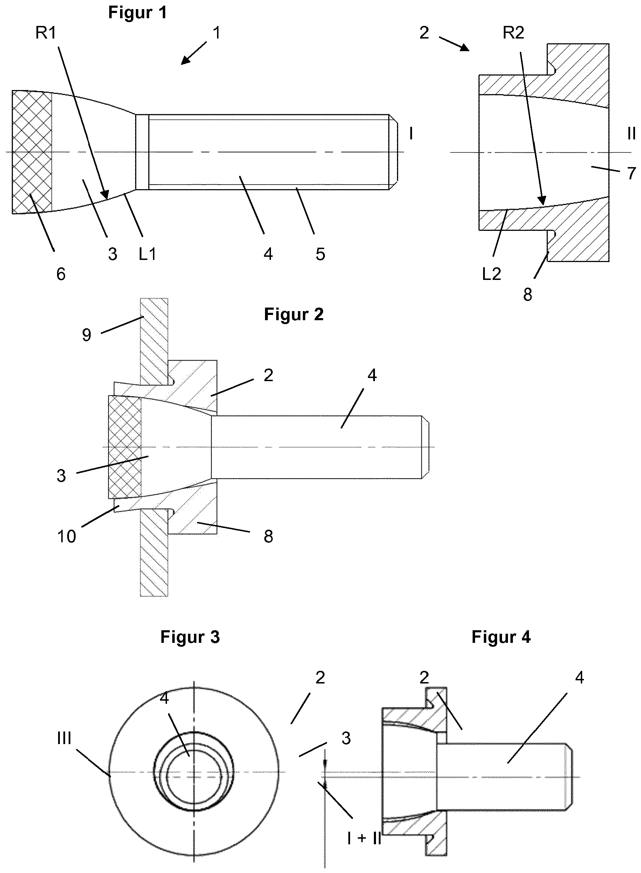

Der in den Figuren 1 und 2 dargestellte Einsatz weist einen Bolzen 1 sowie einen Ring 2 auf, die in Figur 1 getrennt voneinander, d.h. vor ihrer Montage, dargestellt sind. Der Bolzen 1 erstreckt sich entlang einer ersten Längsachse I. Der Ring 2 erstreckt sich entlang einer zweiten Längsachse II.

Der Bolzen 1 weist einen Kopf 3 und einen Schaft 4 auf. Der Schaft 4 ist in der dargestellten Ausführungsform zylindrisch mit einem Außengewinde 5, auf das eine nicht dargestellte Mutter aufgeschraubt werden kann. Alternativ kann der Schaft 4 mit einem Innengewinde oder einem Kreuzstift als Verbindungsmittel versehen sein.

Der Kopf 3 ist gegenüber dem Schaft 4 im Durchmesser vergrößert. Auf der dem Schaft 4 abgewandten Seite ist der Kopf 3 in der dargestellten Ausführungsform bereichsweise mit einer optionalen Rändelung 6 versehen. Alternativ kann der Kopf 3 auch mit einer anderen Profilierung versehen sein.

Der Kopf 3 ist als ein Rotationskörper gestaltet, dessen Außenkontur durch Rotation einer gekrümmten Linie L1 um die erste Längsachse I erzeugt wird. Die Linie L1 ist in dem dargestellten Ausführungsbeispiel ein Kreisabschnitt mit einem Radius R1, der in Figur 1 nicht maßstäblich durch einen Pfeil angedeutet ist. Abweichend hiervon kann die Linie L1 auch Bereiche mit unterschiedlichen Krümmungsradien aufweisen und/oder einen Ellipsenabschnitt aufweisen. Die Linie L1 kann in der Nähe des dem Schaft 4 abgewandten Endes (linkes Ende in Figur 1) zumindest näherungsweise parallel zu der ersten Längsachse I verlaufen. Die Linie L1 ist dabei derart relativ zu der ersten Längsachse I angeordnet und gestaltet, dass sich der Außendurchmesser des Kopfes 3 ausgehend von dem dem Schaft 4 zugewandten Ende zum gegenüberliegenden Ende vergrößert. In dem Beispiel der Figur 1 ist zwischen dem Schaft 4 und dem Kopf 3 ein Absatz ausgebildet.

Der Ring 2 weist eine zentrale Durchgangsöffnung 7 auf, die konzentrisch zu der zweiten Längsachse II ist. Der Ring 2 ist außen zylindrisch gestaltet mit einem im Außendurchmesser vergrößerten Absatz 8.

Die Durchgangsöffnung 7 ist innen als ein Rotationskörper gestaltet, dessen Kontur durch Rotation einer gekrümmten Linie L2 um die zweite Längsachse II erzeugt wird. Die Linie L2 ist in dem dargestellten Ausführungsbeispiel ein Kreisabschnitt mit einem Radius R2, der in Figur 1 nicht maßstäblich durch einen Pfeil angedeutet ist. Der Radius R1 ist dabei kleiner als der Radius R2. Auch die Linie L2 kann Bereiche mit unterschiedlichen Krümmungsradien aufweisen und/oder einen Ellipsenabschnitt aufweisen. Die Linie L2 kann in der Nähe des in Figur 1 linken Endes zumindest näherungsweise parallel zu der zweiten Längsachse II verlaufen. Die Linie L2 ist dabei derart relativ zu der zweiten Längsachse II angeordnet und gestaltet, dass sich der Innendurchmesser der Durchgangsöffnung 7 ausgehend von dem Ende mit dem Absatz 8 zum gegenüberliegenden Ende vergrößert.

Figur 2 stellt den Einsatz in seinem in einer Wand 9 montierten Zustand dar. Die Wand 9, beispielsweise ein dünnes Blech, ist mit einer Durchgangsöffnung zur Aufnahme des Einsatzes versehen. In die Durchgangsöffnung der Wand 9 ist zunächst der Ring 2 in Figur 2 von rechts eingesetzt, so dass der Absatz 8 an der rechten Seite der Wand 9 anliegt. Der außen zylindrische Abschnitt mit kleinerem Durchmesser erstreckt sich dabei durch die Durchgangsöffnung der Wand 9 und steht in Figur 2 links aus dieser heraus.

Weiter ist von links der Bolzen 1 in den Ring 2 eingesetzt. In der Montagesituation der Figur 2 ist der Bolzen 1 bereits, z.B. mittels einer nicht dargestellten Mutter, in den Ring 2 hineingezogen, so dass der Schaft 4 vollständig durch die Wand 9 hindurchgetreten ist und sich der Kopf 3 des Bolzens im Bereich der Durchgangsöffnung der Wand 9 befindet. Der Kopf 3 ist dabei so weit in die Durchgangsöffnung 7 des Rings 2 eingedrungen, dass der Ring 2 mittels des Kopfes 3 plastisch verformt ist. Hierbei hat der Kopf 3 den Ring 2 derart aufgeweitet, dass dieser mit seiner Außenfläche radial mit der Durchgangsöffnung der Wand 9 verpresst ist. Hierdurch wird ein elektrischer Kontakt mit geringem Übergangswiderstand zwischen dem Bolzen 1 über den Ring 2 mit der Innenseite der Durchgangsöffnung der Wand 9 erreicht. Zudem hat der Kopf 3 den durch die Durchgangsöffnung der Wand 9 hervorstehenden Abschnitt des Rings 2, d.h. den dem Absatz 8 abgewandten Abschnitt, unter Ausbildung eines wulstartigen Überstands 10 radial aufgeweitet. Hierdurch ist der Ring 2 auch in axialer Richtung, d.h. zwischen dem Absatz 8 und dem wulstartigen Überstand 10, mit der Wand 9 verpresst.

Eine nicht dargestellte Anschlussklemme kann entweder direkt mit dem Ring 2 verbunden sein oder beispielsweise zwischen der Mutter und dem Ring 2 auf dem Bolzen 1 festgespannt sein. Hierdurch wird die Anschlussklemme mittels des Einsatzes elektrisch mit der Wand 9 verbunden.

In den Figuren 3 und 4 ist eine zweite Ausführungsform eines erfindungsgemäßen Einsatzes dargestellt. Dieser besteht ebenfalls aus einem Bolzen 1 und einem Ring 2, die in eine Durchgangsöffnung einer Wand 9 wie oben beschrieben eingesetzt werden können. Bei der zweiten Ausführungsform ist der Schaft 4 des Bolzens 1 jedoch nicht konzentrisch mit dem Kopf 3 und der Längsachse I angeordnet sondern zu diesen versetzt auf einer parallelen dritten Längsachse III. Der Schaft 4 ist dabei nicht nur zu dem Kopf 3 exzentrisch angeordnet sondern auch zu dem Ring 2, dessen Längsachse II weiterhin konzentrisch zu der Längsachse I des Kopfes 3 ist. Diese Ausgestaltung bewirkt, dass ein auf den Schaft 4 wirkendes Drehmoment zum Einpressen des Bolzens in den Ring zumindest teilweise abgestützt wird, so dass sich der Kopf 3 nicht relativ zu dem Ring 2 dreht und der Ring 2 sich nicht in der Durchgangsöffnung der Wand 9 dreht.

### Bezugszeichenliste

- 1: Bolzen
- 2: Ring
- 3: Kopf
- 4: Schaft
- 5: Außengewinde
- 6: Rändelung
- 7: Durchgangsöffnung
- 8: Absatz
- 9: Wand
- 10: Überstand

- I: erste Längsachse
- II: zweite Längsachse
- III: dritte Längsachse

- L1: erste Linie
- L2: zweite Linie

- R1: erster Radius
- R2: zweiter Radius

## Patentansprüche

1. Einsatz zur Verbindung eines elektrischen Anschlusses mit einer Wand (9) mit
einem elektrisch leitenden Bolzen (1), der einen Kopf (3), der sich entlang einer ersten Längsachse (I) erstreckt, sowie einen Schaft (4), welcher mit wenigstens einem Verbindungsmittel (5) versehen ist, aufweist, und
einem Ring (2) mit einer Durchgangsöffnung (7), die sich entlang einer zweiten Längsachse (II) erstreckt, zur Aufnahme des Bolzens (1),
wobei
der Ring (2) durch eine Bewegung des Kopfes (3) relativ zu dem Ring (2) entlang der zweiten Längsachse (II) unter Ausbildung eines Überstands (10) des Rings (2) verformbar ist,
**dadurch gekennzeichnet, dass**
der Kopf (3) eine Außenkontur aufweist, die wenigstens bereichsweise durch Rotation einer mit einem ersten Radius (R1) gekrümmten und von der ersten Längsachse (I) beabstandeten ersten Linie (L1) um die erste Längsachse (I) erzeugt ist, und dass
die Durchgangsöffnung (7) eine Innenkontur aufweist, die wenigstens bereichsweise durch Rotation einer mit einem zweiten Radius (R2) gekrümmten und von der zweiten Längsachse (II) beabstandeten zweiten Linie (L2) um die zweite Längsachse (II) erzeugt ist.

2. Einsatz nach Anspruch 1, **dadurch gekennzeichnet, dass** der erste Radius (R1) von dem zweiten Radius (R2) verschieden ist, insbesondere dass der erste Radius (R1) kleiner als der zweite Radius (R2) ist.

3. Einsatz nach Anspruch 1 oder 2, **dadurch gekennzeichnet, dass** der Abstand der ersten gekrümmten Linie (L1) von der ersten Längsachse (I) sich vom schaftseitigen Ende des Kopfes (3) zum gegenüberliegenden Ende des Kopfes (3) vergrößert.

4. Einsatz nach einem der vorhergehenden Ansprüche, **dadurch gekennzeichnet, dass** das wenigstens eine Verbindungsmittel ein Innen- oder Außengewinde (5) ist.

5. Einsatz nach einem der vorhergehenden Ansprüche, **dadurch gekennzeichnet, dass** die Außenkontur des Kopfes (3) bereichsweise mit einer Profilierung (6) versehen ist.

6. Einsatz nach einem der vorhergehenden Ansprüche, **dadurch gekennzeichnet, dass** der Schaft (4) sich entlang einer dritten Längsachse (III) erstreckt, die parallel und versetzt zu der ersten Längsachse (I) ist.

7. Einsatz nach einem der vorhergehenden Ansprüche, **dadurch gekennzeichnet, dass** der Ring (2) mit einem Absatz (8) versehen ist, der einen relativ zu dem übrigen Ring (2) größeren Außendurchmesser aufweist.

8. Einsatz nach einem der vorhergehenden Ansprüche, **dadurch gekennzeichnet, dass** der Abstand der zweiten gekrümmten Linie (L2) von der zweiten Längsachse (II) sich von einem Ende zum gegenüberliegenden Ende des Rings (2) vergrößert.

9. Einsatz nach einem der vorhergehenden Ansprüche, **dadurch gekennzeichnet, dass** der Kopf (3) einen Bereich aufweist, dessen Außendurchmesser größer als der Innendurchmesser eines Bereichs des Rings (2) ist.

10. Verfahren zur Herstellung einer Verbindung eines elektrischen Anschlusses mit einer Wand (9) mit folgenden Schritten:
Bereitstellen eines Einsatzes nach einem der vorhergehenden Ansprüche, wobei der Bolzen (1) und/oder der Ring (2) mit dem elektrischen Anschluss verbunden ist oder verbindbar ist,
Einsetzen des Rings (2) in eine Durchgangsöffnung der Wand (9), so dass der Absatz (8) des Rings (2) an einer Seite der Wand (9) anliegt,
Einsetzen des Schafts (4) in den Ring (2) von der dem Absatz (8) gegenüberliegenden Seite,
Verformen des Rings (2) durch eine Bewegung des Kopfes (3) relativ zu dem Ring (2) entlang der zweiten Längsachse (II) unter Ausbildung eines Überstands (10) des Rings (2) auf der dem Absatz (8) gegenüberliegenden Seite der Wand (9).

## Claims

1. Insert for connecting an electrical connector to a wall (9) comprising
an electrically conductive bolt (1) comprising a head (3) which extends along a first longitudinal axis (I) and a shaft (4) which is provided with at least one connecting means (5), and
a ring (2) comprising a through-opening (7) which extends along a second longitudinal axis (II) for receiving the bolt (1),
wherein
the ring (2) can be deformed by a movement of the head (3) relative to the ring (2) along the second longitudinal axis (II) with the formation of a projection (10) of the ring (2),
**characterized in that**
the head (3) comprises an outer contour which, at least in regions, is produced by rotation about the first longitudinal axis (I) of a first line (L1) which is curved with a first radius (R1) and spaced apart from the first longitudinal axis (I) and that
the through-opening (7) comprises an inner contour which, at least in regions, is produced by rotation about the second longitudinal axis (II) of a second line (L2) which is curved with a second radius (R2) and spaced apart from the second longitudinal axis (II).

2. Insert according to Claim 1, **characterized in that** the first radius (R1) differs from the second radius (R2), in particular that the first radius (R1) is smaller than the second radius (R2).

3. Insert according to Claim 1 or 2, **characterized in that** the distance of the first curved line (L1) from the first longitudinal axis (I) increases from the shaft-side end of the head (3) to the opposite end of the head (3).

4. Insert according to any one of the preceding claims, **characterized in that** the at least one connecting means is an internal or external thread (5).

5. Insert according to any one of the preceding claims, **characterized in that** some regions of the outer contour of the head (3) are provided with a profile (6).

6. Insert according to any one of the preceding claims, **characterized in that** the shaft (4) extends along a third longitudinal axis (III) which is parallel and offset to the first longitudinal axis (I).

7. Insert according to any one of the preceding claims, **characterized in that** the ring (2) is provided with a shoulder (8) having an outer diameter that is larger than the rest of the ring (2).

8. Insert according to any one of the preceding claims, **characterized in that** the distance of the second curved line (L2) from the second longitudinal axis (II) increases from one end of the ring (2) to the opposite end of said ring.

9. Insert according to any one of the preceding claims, **characterized in that** the head (3) comprises a region having an outer diameter greater than the inner diameter of a region of the ring (2).

10. Method for producing a connection of an electrical connector to a wall (9) comprising the following steps:
providing an insert according to any one of the preceding claims, wherein the bolt (1) and/or the ring (2) is or can be connected to the electrical connector,
inserting the ring (2) into a through-opening of the wall (9) such that the shoulder (8) of the ring (2) abuts one side of the wall (9),
inserting the shaft (4) into the ring (2) from the side opposite to the shoulder (8),
deforming the ring (2) by a movement of the head (3) relative to the ring (2) along the second longitudinal axis (II) with the formation of a projection (10) of the ring (2) on the side of the wall (9) opposite to the shoulder (8).

## Revendications

1. Pièce d'insertion destinée à connecter un connecteur électrique à une paroi (9) comprenant
un boulon électroconducteur (1) comprenant une tête (3) qui s'étend le long d'un premier axe longitudinal (I) et un arbre (4) qui est muni d'au moins un moyen de connexion (5), et
une bague (2) comprenant une ouverture traversante (7) qui s'étend le long d'un deuxième axe longitudinal (II) pour recevoir le boulon (1),
dans laquelle
la bague (2) peut être déformée par un mouvement de la tête (3) par rapport à la bague (2) le long du deuxième axe longitudinal (II) avec la formation d'une saillie (10) de la bague (2),
**caractérisée en ce que**
la tête (3) comprend un contour extérieur qui, au moins dans des régions, est produit par rotation autour du premier axe longitudinal (I) d'une première ligne (L1) qui est incurvée selon un premier rayon (R1) et espacée du premier axe longitudinal (I) et
**en ce que** l'ouverture traversante (7) comprend un contour intérieur qui, au moins dans des régions, est produit par rotation autour du deuxième axe longitudinal (II) d'une deuxième ligne (L2) qui est incurvée selon un deuxième rayon (R2) et espacée du deuxième axe longitudinal (II).

2. Pièce d'insertion selon la revendication 1, **caractérisée en ce que** le premier rayon (R1) est différent du deuxième rayon (R2), en particulier **en ce que** le premier rayon (R1) est plus petit que le deuxième rayon (R2).

3. Pièce d'insertion selon la revendication 1 ou 2, **caractérisée en ce que** la distance entre la première ligne incurvée (L1) et le premier axe longitudinal (I) augmente de l'extrémité côté arbre de la tête (3) à l'extrémité opposée de la tête (3).

4. Pièce d'insertion selon l'une quelconque des revendications précédentes, **caractérisée en ce que** l'au moins un moyen de connexion est un filet interne ou externe (5).

5. Pièce d'insertion selon l'une quelconque des revendications précédentes, **caractérisée en ce que** certaines régions du contour extérieur de la tête (3) sont pourvues d'un profilé (6).

6. Pièce d'insertion selon l'une quelconque des revendications précédentes, **caractérisée en ce que** l'arbre (4) s'étend le long d'un troisième axe longitudinal (III) qui est parallèle au premier axe longitudinal (I) et décalé par rapport à celui-ci.

7. Pièce d'insertion selon l'une quelconque des revendications précédentes, **caractérisée en ce que** la bague (2) est munie d'un épaulement (8) ayant un diamètre extérieur qui est plus grand que le reste de la bague (2) .

8. Pièce d'insertion selon l'une quelconque des revendications précédentes, **caractérisée en ce que** la distance entre la deuxième ligne incurvée (L2) et le deuxième axe longitudinal (II) augmente d'une extrémité de la bague (2) à l'extrémité opposée de ladite bague.

9. Pièce d'insertion selon l'une quelconque des revendications précédentes, **caractérisée en ce que** la tête (3) comprend une région ayant un diamètre extérieur plus grand que le diamètre intérieur d'une région de la bague (2).

10. Procédé de production d'une connexion d'un connecteur électrique à une paroi (9) comprenant les étapes suivantes :
la fourniture d'une pièce d'insertion selon l'une quelconque des revendications précédentes, dans lequel le boulon (1) et/ou la bague (2) sont ou peuvent être connectés au connecteur électrique,
l'insertion de la bague (2) dans une ouverture traversante de la paroi (9) de sorte que l'épaulement (8) de la bague (2) bute contre un côté de la paroi (9),
l'insertion de l'arbre (4) dans la bague (2) depuis le côté opposé à l'épaulement (8),
la déformation de la bague (2) par un mouvement de la tête (3) par rapport à la bague (2) le long du deuxième axe longitudinal (II) avec la formation d'une saillie (10) de la bague (2) sur le côté de la paroi (9) opposé à l'épaulement (8).
